# EUROPÄISCHE PATENTSCHRIFT

(11) **EP 1 045 172 B1**
(45) Veröffentlichungstag und Bekanntmachung des Hinweises auf die Patenterteilung: **05.11.2003**
(21) Anmeldenummer: 00104885.9
(22) Anmeldetag: 08.03.2000
(51) Int. Cl.: F16H 59/02

(54) **Schalteinrichtung für ein automatisches Getriebe eines Kraftfahrzeuges**
Control device for an automatic transmission of a motor vehicle
Dispositif de commande pour une boîte de vitesses automatique de véhicule automobile

(30) Priorität: 14.04.1999 DE 19916924
(43) Veröffentlichungstag der Anmeldung: 18.10.2000
(73) Patentinhaber: Bayerische Motoren Werke Aktiengesellschaft, 80809 München (DE)
(72) Erfinder: Fürst, Sigmund, Dr., 82216 Maisach (DE); Sedlmaier, Anette, 85777 Fahrenzhausen (DE); Ehrmaier, Rudolf, 81927 München (DE); Neuner, Josef, 83064 Raubling (DE); Abel, Alois, 85296 Rohrbach (DE)

(56) Entgegenhaltungen:
- DE-A- 3 924 318
- DE-A- 19 714 495
- DE-U- 29 802 183

## Beschreibung

Die Erfindung bezieht sich auf ein Kraftfahrzeug mit einer Wähleinrichtung zum Auswählen von Betriebsstellungen eines Kraftfahrzeuggetriebes, nach dem Oberbegriff des Anspruchs 1.

Die DE 197 14 495 A1 beschreibt eine solche Wähleinrichtung, bei der die Anzeige der gegenwärtig angewählten Betriebsstellung und die Anzeige jeder einzelnen weiteren anwählbaren Betriebsstellung immer an der selben Stelle der Anzeigeeinrichtung dargestellt ist und das Steuerelement für das Anwählen jeweils einer bestimmten Betriebsstellung jeweils immer in die selbe Richtung ausgelenkt werden muß.

Gemäß dem Stand der Technik läßt sich ein Wählhebel in zwei parallelen und einer dazu senkrecht angeordneten Betätigungsebene verschieben. Es ergeben sich dabei vier Bewegungsrichtungen zum Anwählen einer neuen Betriebsstellung eines Automatikgetriebes für die Betriebsarten Schrittschaltbetrieb und Fahrstufenautomatik. Um mit vier möglichen Bewegungsrichtungen sechs anwählbare Betriebsstellungen zu erreichen sind zwei verschiedene Betätigungspositionen in Fahrzeuglängsrichtung für den Wählhebel notwendig. Eine Betätigungsposition ist diejenige für die Betriebsart Schrittschaltbetrieb. Die andere Betätigungsposition ist die Ausgangslage des Wählhebels des Automatikgetriebes in der Betriebsart Fahrstufenautomatik. Zwischen diesen beiden Betätigungspositionen kann der Wählhebel in Querrichtung hin- und hergeschaltet werden.

In der Betätigungsposition Schrittschaltbetrieb können die einzelnen Gänge manuell durch Bewegen des Wählhebels geschaltet werden. Der Wählhebel stellt sich dabei immer wieder selbsttätig in seine Betätigungsposition für Schrittschaltbetrieb zurück. Die andere Betätigungsposition des Wählhebels, in die dieser durch Schwenken in Fahrzeugquerrichtung gebracht werden kann, ist die für die Betriebsart Fahrstufenautomatik. Die Auslenkrichtungen in dieser Betätigungsposition weisen sowohl in Fahrzeuglängsrichtung als auch in Fahrzeugquerrichtung. Auch in der Betriebsart Fahrstufenautomatik stellt sich der Wählhebel selbsttätig zurück.

Durch die nicht gezeichnete Auswerteschaltung wird eine im Sichtbereich des Fahrers angebrachte Anzeigeeinrichtung angesteuert, die sowohl die mit dem Wählhebel gegenwärtig angewählte Betriebsstellung anzeigt, als auch die weiteren, wahlweise anwählbaren Betriebsstellungen des Kraftfahrzeuggetriebes. Dabei sind mehr Betriebsstellungen des Kraftfahrzeuggetriebes möglich, als Auslenkrichtungen für das Steuerelement, den Wählhebel, vorhanden sind. Desweiteren ist die Anzeige jeder einzelnen, nicht angewählten Betriebsstellung, immer an der selben Stelle der Anzeigeeinrichtung dargestellt. Beim Anwählen einer neuen Betriebsstellung durch den Wählhebel, wird dieser, jeweils für eine bestimmte Betriebsstellung, jeweils immer in die selbe Richtung ausgelenkt.

Ein Wählhebel, mit dem über vier mögliche Bewegungsrichtungen sechs anwählbare Betriebsstellungen ausgewählt werden können, hat den Nachteil, daß mit ihm kein einfaches intuitives Bedienkonzept für den Fahrer erreicht werden kann, da er nicht nur in Fahrzeuglängsrichtung, sondern auch in Fahrzeugquerrichtung bewegt werden muß.

Aus der DE 298 02 183 U1 ist ein Wählhebel für ein Nutzfahrzeugautomatikgetriebe bekannt. Der Wählhebel kann aus einer Mittelstellung O nach vorne in die in einer Schaltgasse hintereinander liegenden Schaltstellungen U und EU sowie nach hinten in die hintereinander in der Schaltgasse liegenden Stellungen D und ED ausgelenkt werden. Durch manuelles Betätigen des Wählhebels können innerhalb der Fahrstufe "Fahrbetriebe" des Automatikmodus einzelne Gänge manuell hoch- bzw. runtergeschaltet werden.

Deshalb ist es Aufgabe der Erfindung, ein Kraftfahrzeug mit einem über eine elektrische Getriebesteuereinrichtung angesteuerten, automatisch geschalteten Getriebe bereitzustellen, dessen Betriebsstellungen über einen Wählhebel von einem Fahrer intuitiv einfach angesteuert werden können.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird bei einem Kraftfahrzeug mit einem Antriebsmotor und einem automatisch geschalteten Getriebe, insbesondere einem Automatikgetriebe, als Bedienelement mindestens ein Wählhebel verwendet. Mit diesem steuert ein Fahrer eine elektrische Getriebesteuereinrichtung an, die abhängig von einer am Wählhebel gewählten Betriebsstellung für das automatisch geschaltete Getriebe und von anderen Betriebsparametern des Kraftfahrzeugs das automatisch geschaltete Getriebe steuert, wobei durch Auslenken des Wählhebels bestimmte Betriebsstellungen des automatisch geschalteten Getriebes ausgewählt werden, und dieser längs mindestens einer Schaltgasse zum Vorwählen von einzelnen Fahrstufen im Automatikbetrieb in wenigstens zwei Auslenkrichtungen bewegbar ist und sich aus den beiden Auslenkrichtungen selbsttätig in immer dieselbe Ausgangslage zurückstellt. Dabei ist jeder Auslenkrichtung des Wählhebels in der Schaltgasse zum Vorwählen von einzelnen Fahrstufen im Automatikbetrieb jeweils dieselbe Fahrstufe des automatisch geschalteten Getriebes zugeordnet, und in mindestens einer Auslenkrichtung des Wählhebels können zwei verschiedene Fahrstufen angewählt werden, indem der Wählhebel zum Auswählen einer ersten Fahrstufe eine erste Strecke bis zu einem ersten Anschlag in die Auslenkrichtung bewegbar ist und der Wählhebel zum Auswählen einer zweiten Fahrstufe eine zweite, größere Strecke bis zu einem zweiten Anschlag in dieselbe Auslenkrichtung bewegbar ist, wobei der erste Anschlag überdrückbar ist.

Das hat den Vorteil, daß auch bei einem Ausfall der Anzeigeeinrichtung für die Betriebsstellungen ein sicheres und komfortables Einlegen jeder Betriebsstellung durch den Fahrer möglich ist. Das Bedienkonzept ist einprägsam und kann intuitiv nachvollzogen werden. Eine Parksperrenfunktion kann automatisch einlegbar gestaltet werden.

Bei einer bevorzugten Ausführung der Erfindung können mit dem in zwei Auslenkrichtungen bewegbaren Wählhebel bis zu vier verschiedene Fahrstufen angewählt werden, indem der Wählhebel in beide Auslenkrichtungen zum Anwählen jeweils einer Fahrstufe jeweils bis zu einem ersten Anschlag bewegbar ist und der Wählhebel zum Anwählen jeweils einer weiteren Fahrstufe, eine zweite, größere Strecke, jeweils durch Überdrücken des ersten Anschlags bis zu einem zweiten Anschlag bewegbar ist.

Das hat den Vorteil, daß mit dem Wählhebel in einer Schaltebene wenigstens die vier unbedingt notwendigen Fahrstufen für Automatikbetrieb, Fahrbetrieb, D, Rückwärtsfahrbetrieb, R, die Neutralposition, N, in der keine Antriebskraft auf die Fahrzeugräder übertragen wird und die Parkposition, P, in der eine Parksperre die Antriebsräder blockiert, angewählt werden können.

Eine vorteilhafte Ausführung der Erfindung ist dadurch gekennzeichnet, daß mit dem in zwei Auslenkrichtungen bewegbaren Wählhebel die Fahrstufe N angewählt wird, indem dieser in eine der Auslenkrichtungen bis zum ersten Anschlag bewegt wird.

So wird durch Tippen des Wählhebels, im Gegensatz zum Überdrücken, die Neutralposition des automatisch schaltbaren Getriebes eingelegt. In einer bevorzugten Ausführung der Erfindung, bei der der Wählhebel in einer Lenkradebene bewegt werden kann, ist durch tippen nach oben die Fahrstufe N einlegbar, wenn vorher die Fahrstufen P oder D eingelegt waren. Durch tippen nach unten ist die Fahrstufe N einlegbar, wenn vorher die Fahrstufen P oder R eingelegt waren.

Eine weitere bevorzugte Ausführung der Erfindung ist dadurch gekennzeichnet, daß mit dem in zwei Auslenkrichtungen bewegbaren Wählhebel die Fahrstufe P angewählt wird, indem der Wählhebel in eine der Auslenkrichtungen bis zum ersten Anschlag bewegt wird. Hier wird vorteilhafterweise durch Tippen die Fahrstufe P eingelegt, wobei auch vorgesehen sein kann, daß die Fahrstufen P,R und N durch tippen sequentiell eingelegt werden. Für die Fahrstufe D ist dann vorzusehen, daß diese grundsätzlich nur durch Überdrücken, jedoch aus jeder Position eingelegt werden kann. Ebenso kann bevorzugt vorgesehen sein, daß die Fahrstufe P aus jeder Position durch Überdrücken eingelegt wird. Wesentlich ist bei dem sequentiellen Durchschalten der Fahrstufen P,R,N und D, daß mindestens eine Endposition aus jeder beliebigen Position durch überdrücken erreicht wird.

in weiteren vorteilhaften Ausführungen der Erfindung kann dann vorgesehen werden, daß mit dem in zwei Auslenkrichtungen bewegbaren Wählhebel die Fahrstufe R angewählt wird, indem der Wählhebel in eine der Auslenkrichtungen bis zum ersten Anschlag bewegt wird. Oder daß mit dem in zwei Auslenkrichtungen bewegbaren Wählhebel die Fahrstufe R angewählt wird, indem dieser in eine der Auslenkrichtungen, insbesondere in eine in einer Lenkradebene nach oben gerichteten, durch Überdrücken des ersten Anschlags bis zum zweiten Anschlag bewegt wird. Desweiteren ist eine bevorzugte Ausführung der Erfindung dadurch gekennzeichnet, daß mit dem in zwei Auslenkrichtungen bewegbaren Wählhebel die Fahrstufe D angewählt wird, indem dieser in eine der Auslenkrichtungen, insbesondere in eine in einer Lenkradebene nach unten gerichteten, durch Überdrücken des ersten Anschlags bis zum zweiten Anschlag bewegt wird. Bei dieser Lösung ist für Kraftschlußposition immer Überdrücken notwendig. Der Fahrerwunsch wird unabhängig von aktueller Position und Vorgeschichte erkannt, was ein sicheres und intuitives Bedienkonzept ergibt

Bei einer weiteren bevorzugten Ausführung der Erfindung wird die Betriebsstellung P, die Parksperrenfunktion, automatisch durch die Getriebesteuereinrichtung eingelegt, wenn bestimmte Betriebsparameter vorliegen. Alternativ und/oder zusätzlich kann die Betriebsstellung P durch Betätigen einer von der Wählhebelbewegung unabhängigen, manuell bedienbaren Betätigungseinrichtung, insbesondere eines Tastschalters am Wählhebel, eingelegt werden.

Das hat den Vorteil, daß das Einlegen der Parksperre über die Betätigungseinrichtung klar von der Auswahl der anderen Fahrstufen getrennt ist, was die Übersichtlichkeit und die intuitive Bedienungsmöglichkeit weiter erhöht.

Wenn eine optische Anzeigeeinrichtung vorhanden ist, die die jeweils eingelegte Betriebsstellung und die durch den Wählhebel einlegbaren Betriebsstellungen mit der dazu notwendigen Betätigungsrichtung und -art des Wählhebels anzeigt, hat das den Vorteil, daß Kontroll- und Hinweismöglichkeiten für den Fahrer die Bediensicherheit der Wähleinrichtung erhöhen. Dies ist vor allem dann von Vorteil, wenn über die elektrische Getriebesteuereinrichtung alternative Betriebsmöglichkeiten des automatisch geschalteten Getriebes ausgewählt werden können, zum Beispiel das schrittweise Schalten der Gänge im manuellen Betrieb oder das Vorwählen von einzelnen Fahrstufen im Automatikbetrieb (D,R,N,P) unter Zugrundelegung einer weiteren Schaltkennlinie, insbesondere mit sportlicherer Abstimmung.

Eine weitere bevorzugte Ausführung der Erfindung sieht vor, daß die Betriebsstellungen des automatisch geschalteten Getriebes im alternativen Betrieb mindestens teilweise durch den Wählhebel angewählt werden, wobei die Betriebsstellungen zusätzlich mindestens teilweise durch die optische Anzeigeeinrichtung angezeigt werden können. Damit ist die Wähleinrichtung vorteilhafterweise so gestaltet, daß der Fahrer die Möglichkeit hat, sich für Schrittschaltbetrieb oder Fahrstufenautomatik zu entscheiden, ohne daß weitere Bedienorgane oder Anzeigeeinrichtungen benötigt werden.

Zwei bevorzugte Ausführungsbeispiele der Erfindung sind in der nachfolgenden Beschreibung und der zugehörigen Zeichnung näher dargestellt. Es zeigen:
- Figur 1: schematisch einen sich in seine Betätigungsposition selbsttätig zurückstellenden, nur teilweise gezeichneten Wählhebel, dessen nicht gezeichnete Befestigungsstelle die nicht gezeichnete Lenksäule eines Kraftfahrzeugs ist,
- Figur 2: sechs einzelne unterschiedliche Anzeigebilder einer Anzeigeeinrichtung für einen Wählhebel entsprechend der Figur 1, mit je fünf Anzeigefeldern und zugeordneter, angedeutet dargestellter Wählhebelbewegung,
- Figur 3: schematisch eine weitere Ausführungsform eines sich in seine Betätigungsposition selbsttätig zurückstellenden, nur teilweise gezeichneten Wählhebels, dessen nicht gezeichnete Befestigungsstelle die nicht gezeichnete Lenksäule eines Kraftfahrzeugs ist, mit durch Bezugslinien und Richtungspfeile angedeutet gezeichneten Betätigungsstrecken und -richtungen,
- Figur 4: sechs einzelne unterschiedliche Anzeigebilder einer Anzeigeeinrichtung für einen Wählhebel entsprechend der Figur 3, mit je sechs Anzeigefeldern und zugeordneter, angedeutet dargestellter Wählhebelbewegung und
- Figur 5: ein Kraft - Weg Diagramm für einen Wählhebel entsprechend den Figuren 1 und 3, wobei die Betätigungskraft für die Wählhebelbewegung entlang der Abszisse und der Auslenkweg der Wählhebelbewegung entlang der Ordinate aufgetragen sind.

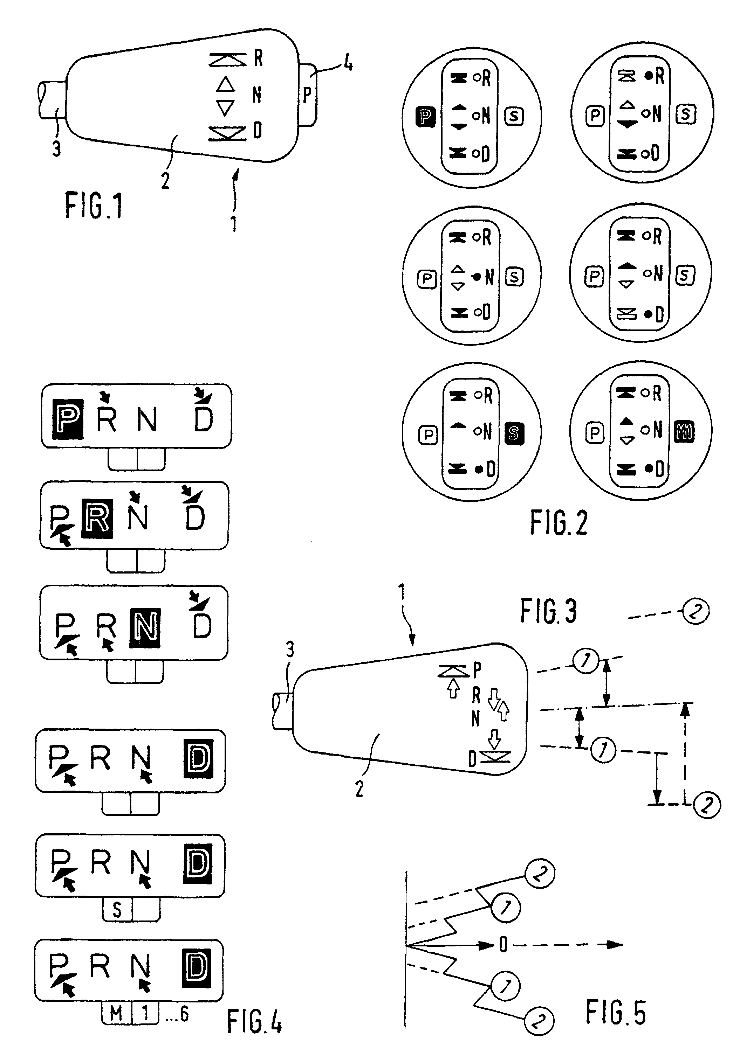

Nach Figur 1 besteht ein Wählhebel 1 aus einem Betätigungsknauf 2, der am Ende einer Wählhebelstange 3 angebracht ist, wobei die Wählhebelstange 3 mit ihrem anderen, nicht dargestellten Ende, an einer nicht gezeichneten Lenksäule eines Kraftfahrzeugs in zwei Auslenkrichtungen, in einer Ebene eines nicht gezeichneten Lenkrads nach oben und nach unten schwenkbar angebracht ist. Der Wählhebel 1 dient als Wähleinrichtung zum Einlegen der einzelnen Fahrstufen eines Kraftfahrzeuggetriebes und weist hierfür am nicht gezeichneten anderen Ende der Wählhebelstange 3 elektrische Kontakte auf. Durch Schließen der Kontakte bei Betätigung des Wählhebels 1 werden Schaltbefehle an eine Auswerteschaltung abgegeben. Die Auswerteschaltung ist nicht Gegenstand der Erfindung und daher nicht gezeichnet und nicht näher erläutert. Es sei nur so viel erwähnt, daß sie ohne weiteres von einem Fachmann aufgebaut werden kann und vorzugsweise einen Mikrocomputer enthält. Ihre Aufgabe ist es, einmal Stellglieder für ein ebenfalls nicht dargestelltes Fahrzeuggetriebe anzusteuern. Zum anderen bestimmt sie ein Anzeigebild einer Anzeigeeinrichtung für eine Ganganzeige, im nicht gezeichneten Blickfeld des Fahrers.

Der Wählhebel 1 läßt sich in zwei Auslenkrichtungen, nach oben und nach unten in der Lenkradebene bewegen, aus denen er sich selbsttätig in immer dieselbe Ausgangslage zurückstellt. Dabei ist jeder Auslenkrichtung des Wählhebels 1 jeweils dieselbe Fahrstufe eines automatisch geschalteten Getriebes zugeordnet, und in beiden Auslenkrichtungen des Wählhebels 1 können zwei verschiedene Fahrstufen angewählt werden, indem der Wählhebel 1 zum Auswählen einer ersten Fahrstufe eine erste Strecke bis zu einem ersten Anschlag in die Auslenkrichtung nach oben bewegbar ist und der Wählhebel zum Auswählen einer zweiten Fahrstufe eine zweite, größere Strecke bis zu einem zweiten Anschlag in dieselbe Auslenkrichtung bewegbar ist, wobei der erste Anschlag überdrückbar ist. Dieselbe Systematik des Wählhebels 1 zum Auswählen von Fahrstufen ist auch in der Auslenkrichtung nach unten verwirklicht. Angedeutet gezeichnet ist dies auch durch die Beschriftung des Betätigungsknaufs 2. Hier sind die anwählbaren Fahrstufen eines automatischen Getriebes durch R,N,D angedeutet dargestellt, verbunden mit Symbolen 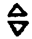 und 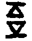 . Dabei bedeutet 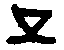 und 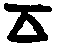 "Überdrücken" des Wählhebels 1, in Richtung der Dreiecksspitze des jeweiligen Symbols, jeweils zum Einlegen der daneben angedeutet dargestellten Fahrstufe R oder D. Es ergeben sich so vier Auslenkmöglichkeiten für den Wählhebel 1, die mit drei Fahrstufen kombiniert sind. Durch "Tippen" des Wählhebels 1 nach oben oder nach unten wird die Fahrstufe N, ausgewählt, durch "Überdrücken" des Wählhebels 1 nach oben die Fahrstufe R und durch "Überdrücken" des Wählhebels 1 nach unten die Fahrstufe D. Wird ein separater Schalter am Wählhebel 1 betätigt, hier als Druckschalter 4 ausgebildet, so wird die Fahrstufe P, die Parksperreinrichtung eingelegt.

Durch die nicht gezeichnete Auswerteschaltung wird eine im Sichtbereich des Fahrers angebrachte Anzeigeeinrichtung angesteuert, die sowohl die mit dem Wählhebel 1 gegenwärtig angewählte Betriebsstellung anzeigt, als auch die weiteren, wahlweise anwählbaren Betriebsstellungen des Kraftfahrzeuggetriebes. Die Anzeige jeder einzelnen, nicht angewählten Betriebsstellung, ist immer an der selben Stelle der Anzeigeeinrichtung dargestellt. Beim Anwählen einer neuen Betriebsstellung durch den Wählhebel 1, wird dieser, jeweils für eine bestimmte Betriebsstellung, jeweils immer in die selbe Richtung ausgelenkt, getippt oder überdrückt.

Figur 2 zeigt dies anhand sechs verschiedener Anzeigebilder der Anzeigeeinrichtung im Sichtbereich des Fahrers. Die schwarz ausgemalt gezeichneten Symbole sollen in der Figur zum Beispiel eine Beleuchtung angedeutet darstellen und zeigen dadurch die gegenwärtig anwählbaren Fahrstufen und die dazu notwendige Bewegung des Wählhebels 1 an, während die schwarz unterlegten Punkte bzw. Flächen die gegenwärtig eingelegte Fahrstufe anzeigen. Die Beschreibung geht von der Darstellung der Anzeigeeinrichtung oben links aus, die zeigt, daß die Fahrstufe P eingelegt ist, indem das linke Anzeigefeld schwarz unterlegt, d.h. zum Beispiel beleuchtet ist. Im mittleren Anzeigefeld sind alle Fahrstufen R,N,D mit schwarz unterlegten Symbolen gekennzeichnet, das heißt, jede der Fahrstufen kann ausgewählt werden, während durch die drei Leuchtpunkte keine Fahrstufe als eingelegt angezeigt wird. Einlegbar ist die Fahrstufe N durch tippen der Wählhebels 1 nach oben oder unten oder die Fahrstufe D durch überdrücken des Wählhebels 1 nach unten oder die Fahrstufe R durch überdrücken des Wählhebels 1 nach oben.

Die Darstellung der Anzeigeeinrichtung links in der Mitte zeigt, daß durch tippen am Wählhebel 1 die Fahrstufe N eingelegt wurde, da deren Leuchtpunkt im mittleren Anzeigefeld schwarz unterlegt ist. Im linken Anzeigefeld erscheint die Fahrstufe P, die jetzt wieder ausgewählt werden kann. Die Darstellung der Anzeigeeinrichtung links unten zeigt weiter, daß die Fahrstufe D durch Überdrücken des Wählhebels 1 nach unten eingelegt wurde. ist. Im schwarz unterlegten rechten Anzeigefeld wird jetzt mit S angezeigt, daß ein Sportprogramm ausgewählt wurde. Das Sportprogramm wurde mit einem nicht dargestellten separaten Tastschalter ausgewählt.

Durch überdrücken des Wählhebels 1 nach oben, wurde jetzt, wie die Darstellung der Anzeigeeinrichtung rechts oben zeigt, die Fahrstufe R eingelegt. Das nächste Bild der Anzeigeeinrichtung, rechts in der Mitte, zeigt, daß wieder die Fahrstufe D durch überdrücken des Wählhebels 1 nach unten eingelegt wurde. Die Darstellung der Anzeigeeinrichtung rechts unten zeigt weiter, daß die Fahrstufe D eingelegt bleibt und daß im schwarz unterlegten rechten Anzeigefeld jetzt die Gangstufe M1 oder M2.....M5 angezeigt wird, je nachdem, welche Gangstufe manuell im Getriebe eingelegt wurde. In dieser Betriebsart Schrittschaltbetrieb ist es jetzt möglich, die Gänge manuell durchzuschalten. Beim Wechsel zwischen den Betriebsarten, durch Betätigen eines nicht dargestellten separaten Tastschalters, wird in der Betriebsart Schrittschaltbetrieb genau der Gang übernommen, der in der Betriebsart Fahrstufenautomatik eingelegt war. Das rechte Anzeigefeld zeigt in der Betätigungsposition Schrittschaltbetrieb, mit der entsprechenden Zahl, den jeweils eingelegten Gang an.

Figur 3 zeigt eine weitere Ausführungsform des sich in seine Betätigungsposition selbsttätig zurückstellenden, nur teilweise gezeichneten Wählhebels 1, dessen nicht gezeichnete Befestigungsstelle die nicht gezeichnete Lenksäule eines Kraftfahrzeugs ist, mit durch Bezugslinien und Richtungspfeile angedeutet gezeichneten Betätigungsstrecken und -richtungen. Der Wählhebel 1 besteht ebenfalls aus einem Betätigungsknauf 2, der am Ende der Wählhebelstange 3 angebracht ist, wobei die Wählhebelstange 3 mit ihrem anderen, nicht dargestellten Ende, an der nicht gezeichneten Lenksäule eines Kraftfahrzeugs in zwei Auslenkrichtungen, in einer Ebene eines nicht gezeichneten Lenkrads nach oben und nach unten schwenkbar angebracht ist. Entsprechend der Beschreibung zu Figur 1 läßt sich der Wählhebel 1 in zwei Auslenkrichtungen, nach oben und nach unten in der Lenkradebene bewegen, aus denen er sich selbsttätig in immer dieselbe Ausgangslage zurückstellt. Dabei lassen sich die Fahrstufen P,R,N sequentiell nacheinander durch "Tippen" einlegen, während sich die Fahrstufe D nur durch "Überdrücken", allerdings dann aus jeder Position einlegen läßt. Ebenso kann die Fahrstufe P aus jeder Position durch Überdrücken" erreicht werden. Angedeutet gezeichnet ist dies auch durch die Beschriftung des Betätigungsknaufs 2. Hier sind die anwählbaren Fahrstufen des automatischen Getriebes durch P,R,N,D angedeutet dargestellt, verbunden mit Symbolen 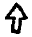 und 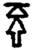 . Dabei bedeutet 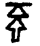 "Überdrücken" des Wählhebels 1, in Richtung der Dreiecksspitze des jeweiligen Symbols, jeweils zum Einlegen der daneben angedeutet dargestellten Fahrstufe P oder D. 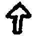 bedeutet "Tippen" des Wählhebels 1, in Richtung der Pfeilspitze des Symbols, jeweils zum Einlegen der daneben angedeutet dargestellten Fahrstufe R oder N. Es ergeben sich wieder vier Auslenkmöglichkeiten für den Wählhebel 1, zwei, indem dieser durch "tippen" je eine erste Strecke bis zu einem ersten Anschlag ① in die Auslenkrichtung nach oben oder unten bewegt wird und zwei, indem der Wählhebel 1 durch "Überdrücken" je eine zweite, größere Strecke bis zu einem zweiten Anschlag ② in dieselben Auslenkrichtungen bewegt wird, wobei der erste Anschlag überdrückt wird.

Figur 4 zeigt sechs verschiedene Anzeigebilder der Anzeigeeinrichtung im Sichtbereich des Fahrers. Die schwarz ausgemalt gezeichneten Symbole sollen in der Figur zum Beispiel eine Beleuchtung angedeutet darstellen und zeigen dadurch die gegenwärtig anwählbaren Fahrstufen und die dazu notwendige Bewegung des Wählhebels 1 an, während die schwarz unterlegten Buchstaben die gegenwärtig eingelegte Fahrstufe anzeigen. Die Beschreibung geht von der Darstellung der Anzeigeeinrichtung oben aus, die zeigt, daß die Fahrstufe P eingelegt ist, indem das linke Anzeigefeld schwarz unterlegt, d.h. zum Beispiel beleuchtet ist. Anwählbar sind die Fahrstufen R oder D, mit schwarz unterlegten Symbolen gekennzeichnet, das heißt, jede der Fahrstufen kann ausgewählt werden, die Fahrstufe R durch Tippen der Wählhebels 1 nach unten oder die Fahrstufe D durch Überdrücken des Wählhebels 1 nach unten.

Die nächste Darstellung der Anzeigeeinrichtung zeigt, daß durch tippen am Wählhebel 1 nach unten die Fahrstufe R eingelegt wurde, da deren Anzeigebild schwarz unterlegt ist. Jetzt können die Fahrstufen P, N oder D ausgewählt werden. Die Darstellung der Anzeigeeinrichtung weiter unten zeigt, daß die Fahrstufe N durch Tippen des Wählhebels 1 nach unten eingelegt wurde. Durch Überdrücken des Wählhebels 1 nach unten, wurde jetzt, wie die Darstellung der Anzeigeeinrichtung im vierten Bild von oben zeigt, die Fahrstufe D eingelegt. Das fünfte Bild der Anzeigeeinrichtung zeigt, daß wieder die Fahrstufe D eingelegt ist. Im linken unteren Anzeigefeld wird jetzt mit S angezeigt, daß ein Sportprogramm mit anderer Schaltkennlinie ausgewählt wurde.

Die Darstellung der Anzeigeeinrichtung ganz unten zeigt weiter, daß die Fahrstufe D eingelegt bleibt und daß im unteren Anzeigefeld jetzt die Gangstufe M1 oder M2.....M6 angezeigt wird, je nachdem, welche Gangstufe manuell im Getriebe eingelegt wurde. In dieser Betriebsart Schrittschaltbetrieb ist es jetzt möglich, die Gänge manuell durchzuschalten. Beim Wechsel zwischen den Betriebsarten wird in der Betriebsart Schrittschaltbetrieb genau der Gang übernommen, der in der Betriebsart Fahrstufenautomatik eingelegt war. Das untere Anzeigefeld zeigt in der Betätigungsposition Schrittschaltbetrieb, mit der entsprechenden Zahl, den jeweils eingelegten Gang an.

Figur 5 zeigt das Kraft - Weg Diagramm für einen Wählhebel entsprechend den Figuren 1 und 3, wobei die Betätigungskraft für die Wählhebelbewegung entlang der Abszisse und der Auslenkweg der Wählhebelbewegung entlang der Ordinate aufgetragen sind. Der Wählhebel 1 ist längs einer Schaltgasse zum Vorwählen von einzelnen Fahrstufen im Automatikbetrieb P,D,R,N in zwei Auslenkrichtungen bewegbar und stellt sich aus beiden Auslenkrichtungen selbsttätig in immer dieselbe Ausgangslage zurück. Dabei können in beiden Auslenkrichtungen des Wählhebels 1 zwei verschiedene Fahrstufen P,D,R,N angewählt werden, indem der Wählhebel 1 zum Auswählen einer ersten Fahrstufe R,N eine erste Strecke bis zu einem ersten Anschlag ① in die Auslenkrichtung bewegbar ist und der Wählhebel 1 zum Auswählen einer zweiten Fahrstufe eine zweite, größere Strecke bis zu einem zweiten Anschlag ② in dieselbe Auslenkrichtung bewegbar ist, wobei der erste Anschlag ① überdrückt wird. So können mit dem in zwei Auslenkrichtungen bewegbaren Wählhebel 1 bis zu vier verschiedene Fahrstufen P,D,R,N angewählt werden.

## Patentansprüche

1. Kraftfahrzeug mit einem Antriebsmotor und einem automatisch geschalteten Getriebe, insbesondere einem Automatikgetriebe, und als Bedienelement mindestens mit einem Wählhebel (1), mit dem ein Fahrer eine elektrische Getriebesteuereinrichtung ansteuert, die abhängig von einer am Wählhebel (1) gewählten Betriebsstellung für das automatisch geschaltete Getriebe und von anderen Betriebsparametern des Kraftfahrzeugs das automatisch geschaltete Getriebe steuert,
wobei durch Auslenken des Wählhebels (1) bestimmte Fahrstufen (D,R,N,P) des automatisch geschalteten Getriebes anwählbar sind, und dieser längs mindestens einer Schaltgasse zum Anwählen der einzelnen Fahrstufen (D,R,N,P) des Automatikbetriebs in wenigstens zwei Auslenkrichtungen bewegbar ist und sich aus den beiden Auslenkrichtungen selbsttätig in immer dieselbe Ausgangslage zurückstellt,
wobei den beiden Auslenkrichtungen des Wählhebels (1) die einzelnen Fahrstufen (D,R,N,P) des Automatikbetriebs in fest vorgegebener Weise zugeordnet sind,
**dadurch gekennzeichnet, daß**
in mindestens einer der beiden Auslenkrichtungen des Wählhebels (1) zwei verschiedene Fahrstufen (D,R,N,P) des Automatikbetriebs angewählt werden können, wobei der Wählhebel (1) zum Anwählen einer ersten Fahrstufe (D,R,N,P) des Automatikbetriebs eine erste Strecke bis zu einem ersten Anschlag in die eine Auslenkrichtung bewegt wird und der Wählhebel (1) zum Anwählen einer zweiten Fahrstufe (D,R,N,P) eine zweite, größere Strecke bis zu einem zweiten Anschlag in dieselbe Auslenkrichtung bewegt wird,
wobei der erste Anschlag überdrückt wird.

2. Kraftfahrzeug nach Anspruch 1, **dadurch gekennzeichnet, daß** mit dem in zwei Auslenkrichtungen bewegbaren Wählhebel (1) bis zu vier verschiedene Fahrstufen (D,R,N,P) angewählt werden können, indem der Wählhebel (1) in beide Auslenkrichtungen zum Anwählen jeweils einer Fahrstufe (D,R,N,P) jeweils bis zu einem ersten Anschlag bewegbar ist und der Wählhebel (1) zum Anwählen jeweils einer weiteren Fahrstufe (D,R,N,P), eine zweite, größere Strecke, jeweils durch Überdrücken des ersten Anschlags bis zu einem zweiten Anschlag bewegbar ist.

3. Kraftfahrzeug nach Anspruch 2, **dadurch gekennzeichnet, daß** mit dem in zwei Auslenkrichtungen bewegbaren Wählhebel (1) die Fahrstufe N angewählt wird, indem der Wählhebel (1) in eine der Auslenkrichtungen bis zum ersten Anschlag bewegt wird.

4. Kraftfahrzeug nach einem der Ansprüche 1 bis 3, **dadurch gekennzeichnet, daß** mit dem in zwei Auslenkrichtungen bewegbaren Wählhebel (1) die Fahrstufe P angewählt wird, indem der Wählhebel (1) in eine der Auslenkrichtungen bis zum ersten Anschlag bewegt wird.

5. Kraftfahrzeug nach einem der Ansprüche 1 bis 4, **dadurch gekennzeichnet, daß** mit dem in zwei Auslenkrichtungen bewegbaren Wählhebel (1) die Fahrstufe R angewählt wird, indem der Wählhebel (1) in eine der Auslenkrichtungen bis zum ersten Anschlag bewegt wird.

6. Kraftfahrzeug nach einem der Ansprüche 1 bis 5, **dadurch gekennzeichnet, daß** mit dem in zwei Auslenkrichtungen bewegbaren Wählhebel (1) die Fahrstufe R angewählt wird, indem der Wählhebel (1) in eine der Auslenkrichtungen, insbesondere in eine in einer Lenkradebene nach oben gerichteten, durch Überdrücken des ersten Anschlags bis zum zweiten Anschlag bewegt wird.

7. Kraftfahrzeug nach einem der Ansprüche 1 bis 6, **dadurch gekennzeichnet, daß** mit dem in zwei Auslenkrichtungen bewegbaren Wählhebel (1) die Fahrstufe D angewählt wird, indem der Wählhebel (1) in eine der Auslenkrichtungen, insbesondere in eine in einer Lenkradebene nach unten gerichteten, durch Überdrücken des ersten Anschlags bis zum zweiten Anschlag bewegt wird.

8. Kraftfahrzeug nach einem der Ansprüche 1 bis 7, **dadurch gekennzeichnet, daß** die Fahrstufe P, die Parksperrenfunktion, automatisch durch die Getriebesteuereinrichtung eingelegt wird, wenn bestimmte Betriebsparameter vorliegen.

9. Kraftfahrzeug nach einem der Ansprüche 1 bis 8, **dadurch gekennzeichnet, daß** die Fahrstufe P, die Parksperrenfunktion, durch Betätigen einer von der Wählhebelbewegung unabhängigen, manuell bedienbaren Betätigungseinrichtung, insbesondere eines Tastschalters am Wählhebel (1), eingelegt wird.

10. Kraftfahrzeug nach einem der Ansprüche 1 bis 9, **dadurch gekennzeichnet, daß** eine optische Anzeigeeinrichtung vorhanden ist, die die jeweils eingelegte Betriebsstellung des automatisch geschalteten Getriebes und die durch den Wählhebel (1) einlegbaren Betriebsstellungen mit der dazu notwendigen Betätigungsrichtung und -art des Wählhebels (1) anzeigt.

11. Kraftfahrzeug nach einem der Ansprüche 1 bis 10, **dadurch gekennzeichnet, daß** vom Fahrer über die elektrische Getriebesteuereinrichtung alternative Betriebsmöglichkeiten des automatisch geschalteten Getriebes ausgewählt werden können, zum Beispiel das schrittweise Schalten der Gänge im manuellen Betrieb oder das Vorwählen von einzelnen Fahrstufen (D,R,N,P) im Automatikbetrieb unter Zugrundelegung einer weiteren Schaltkennlinie, insbesondere mit sportlicherer Abstimmung.

12. Kraftfahrzeug nach Anspruch 11, **dadurch gekennzeichnet, daß** die Betriebsmöglichkeiten des Getriebes im alternativen Betrieb mindestens teilweise durch den Wählhebel (1) angewählt werden.

13. Kraftfahrzeug nach Anspruch 11 oder 12, **dadurch gekennzeichnet, daß** die Betriebsmöglichkeiten des Getriebes im alternativen Betrieb mindestens teilweise durch eine optische Anzeigeeinrichtung angezeigt werden.

## Claims

1. A motor vehicle with a driving engine and an automatically shifted gear, especially an automatic gear unit, and a control element in the form of at least one selector lever (1) by means of which a driver actuates an electric gear control device which actuates the automatic gear unit in dependence on an operating position chosen via the selector lever (1) and in dependence on other operating parameters of the vehicle,
wherein particular positions (D, R, N, P) of the automatic gear unit are selectable by moving the selector lever (1), which is movable along at least one shift lane for selecting the individual positions (D, R, N, P) of the automatic gear unit in at least two directions, and returns automatically from the two directions, always into the same starting position,
wherein the two directions in which the lever (1) can be moved are associated with the individual positions (D, R, N, P) of the automatic gear unit in a permanently set manner,
**characterised in that**
at least one of the two directions for moving the lever (1), two different positions (D, R, N, P) of the automatic gear unit can be selected, wherein the lever (1) in order to select a first position (D, R, N, P) of the automatic gear unit is moved a first distance up to a first stop in one direction and in order to select a second position (D, R, N, P) the lever is moved a second, larger distance up to a second stop in the same direction, overriding the first stop.

2. A vehicle according to claim 1, **characterised in that** up to four different positions (D, R, N, P) can be selected by moving the lever (1) in two directions, **in that** the lever (1), in both directions for selecting a position (D, R, N, P), is moved up to a first stop so as in order to select a second position (D, R, N, P) and the lever (1) is moved a second, longer distance up to a second stop, overriding the first stop.

3. A vehicle according to claim 2, **characterised in that** the N position is selected by the lever (1) movable in two directions by moving the lever (1) in one direction up to the first stop.

4. A vehicle according to any of claims 1 to 3, **characterised in that** the P position is selected by the lever (1) movable in two directions by moving the lever (1) up to the first stop in one of the directions.

5. A vehicle according to any of claims 1 to 4, **characterised in that** the R position is selected by the lever (1) movable in two directions, by moving the lever (1) in one of the directions up to the first stop.

6. A vehicle according to any of claims 1 to 5, **characterised in that** the R position is selected by the lever (1) movable in two directions by moving the lever (1) in one of the directions, especially upwards in a steering-wheel plane, up to a second stop overriding the first stop.

7. A vehicle according to any of claims 1 to 6, **characterised in that** the D position is selected by means of the lever (1) movable in two directions, by moving the lever (1) in one of the directions, especially downwards in a steering-wheel plane, up to a second stop overriding the first stop.

8. A vehicle according to any of claims 1 to 7, **characterised in that** the P position or parking and blocking function is automatically engaged by the gear control device when certain operating parameters apply.

9. A vehicle according to any of claims 1 to 8, **characterised in that** the P position or parking and blocking function is engaged by operating a device, especially a push-button on the shift lever (1), which can be manually operated irrespective of the movement of the shift lever.

10. A vehicle according to any of claims 1 to 9, **characterised in that** an optical indicator device is present and indicates the chosen operating position of the automatic gear unit and the operating positions which can be engaged by the lever (1), together with the required direction and mode of operating the lever (1).

11. A vehicle according to any of claims 1 to 10, **characterised in that** the driver, via the electric gear control device, can select alternative modes of operating the automatic gear unit, e.g. step-by-step gear shifting in manual operation or preselection of individual positions (D, R, N, P) in automatic operation based on an additional gear-shifting characteristic, especially adapted to sports cars.

12. A vehicle according to claim 11, **characterised in that** the possibilities of operating the gear unit in alternative operations are selected at least partly via the selector lever (1).

13. A vehicle according to claim 11 or claim 12, **characterised in that** the possibilities of operating the automatic gear unit in alternative operation are displayed at least partly by an optical display device.

## Revendications

1. Véhicule automobile comprenant un moteur d'entraînement et une transmission à couplage automatique, notamment une transmission automatique, et comme élément d'actionnement au moins un levier de sélection (1) avec lequel un conducteur commande un dispositif de commande de transmission électrique, qui commande la transmission à couplage automatique en fonction d'une position de fonctionnement choisie sur le levier de sélection (1) pour la transmission à couplage automatique et d'autres paramètres de fonctionnement du véhicule,
des niveaux de conduite (D, R, N, P) déterminés de la transmission à couplage automatique pouvant être sélectionnés par excursion du levier de sélection (1), celui-ci étant mobile dans au moins deux directions d'excursion le long d'au moins une voie de couplage pour sélectionner les différents niveaux de conduite (D, R, N, P) du fonctionnement automatique et, depuis les deux directions d'excursion, retournant toujours automatiquement dans la même position initiale,
aux deux directions d'excursion du levier de sélection (1) étant associés de manière déterminée les différents niveaux de conduite (D, R, N, P) du fonctionnement automatique,
**caractérisé en ce que**
dans un moins l'une des deux directions d'excursion du levier de sélection (1) deux niveaux de conduite (D, R, N, P) différents du fonctionnement automatique peuvent être sélectionnés, le levier de sélection (1) pour sélectionner un premier niveau de conduite (D, R, N, P) du fonctionnement automatique étant déplacé dans une direction d'excursion sur une première trajectoire jusqu'à une première butée, et le levier de sélection (1) pour sélectionner un deuxième niveau de conduite (D, R, N, P) étant déplacé dans la même direction d'excursion sur une deuxième trajectoire, plus longue, jusqu'à une deuxième butée, la première butée étant alors dépassée.

2. Véhicule automobile selon la revendication 1,
**caractérisé en ce qu'**
à l'aide du levier de sélection (1) mobile dans deux directions d'excursion on peut sélectionner jusqu'à quatre niveaux de conduite (D, R, N, P) différents, le levier de sélection (1) pouvant être déplacé dans les deux directions d'excursion jusqu'à une première butée pour sélectionner respectivement un niveau de conduite (D, R, N, P), et le levier de sélection (1), pour sélectionner respectivement un autre niveau de conduite (D, R, N, P), pouvant être déplacé sur une deuxième trajectoire, plus longue, jusqu'à une deuxième butée, respectivement en dépassant la première butée.

3. Véhicule automobile selon la revendication 2,
**caractérisé en ce qu'**à
l'aide du levier de sélection (1) mobile dans deux directions d'excursion, on sélectionne le niveau de conduite N, le levier de sélection (1) étant déplacé dans l'une des directions d'excursion jusqu'à la première butée.

4. Véhicule automobile selon l'une des revendications 1 à 3,
**caractérisé en ce qu'**
à l'aide du levier de sélection (1) mobile dans deux directions d'excursion, on sélectionne le niveau de conduite P, le levier de sélection (1) étant déplacé dans l'une des directions d'excursion jusqu'à la première butée.

5. Véhicule automobile selon l'une des revendications 1 à 4,
**caractérisé en ce qu'**
à l'aide du levier de sélection (1) mobile dans deux directions d'excursion, on sélectionne le niveau de conduite R, le levier de sélection (1) étant déplacé dans l'une des directions d'excursion jusqu'à la première butée.

6. Véhicule automobile selon l'une des revendications 1 à 5,
**caractérisé en ce qu'**
à l'aide du levier de sélection (1) mobile dans deux directions d'excursion, on sélectionne le niveau de conduite R, le levier de sélection (1) étant déplacé jusqu'à la deuxième butée dans l'une des directions d'excursion, notamment dans une direction orientée vers le haut dans un plan de volant, par dépassement de la première butée.

7. Véhicule automobile selon l'une des revendications 1 à 6,
**caractérisé en ce qu'**
à l'aide du levier de sélection (1) mobile dans deux directions d'excursion, on sélectionne le niveau de conduite D, le levier de sélection (1) étant déplacé jusqu'à la deuxième butée dans l'une des directions d'excursion, notamment dans une direction orientée vers le bas dans un plan de volant, par dépassement de la première butée.

8. Véhicule automobile selon l'une des revendications 1 à 7,
**caractérisé en ce qu'**
en présence de paramètres de fonctionnement déterminés, le niveau de conduite P, la fonction de verrouillage de stationnement, est engagé automatiquement par le dispositif de commande de transmission.

9. Véhicule automobile selon l'une des revendications 1 à 8,
**caractérisé en ce que**
le niveau de conduite P, la fonction de verrouillage de stationnement, est engagé par l'actionnement d'un dispositif d'actionnement manuel, notamment d'un bouton-poussoir situé sur le levier de sélection (1), indépendant du mouvement du levier de sélection.

10. Véhicule automobile selon l'une des revendications 1 à 9,
**caractérisé en ce qu'**
un dispositif d'affichage optique est présent, qui affiche la position de fonctionnement respectivement engagée de la transmission à couplage automatique, ainsi que les positions de fonctionnement pouvant être engagées à l'aide du levier de sélection (1) et la direction et le mode d'actionnement du levier de sélection (1) nécessaires à cet effet.

11. Véhicule automobile selon l'une des revendications 1 à 10,
**caractérisé en ce que**
le conducteur peut choisir, à l'aide du dispositif de commande de transmission électrique, des possibilités de fonctionnement alternatives de la transmission à couplage automatique, par exemple l'engagement pas à pas des vitesses en fonctionnement manuel, ou la présélection de différents niveaux de conduite (D, R, N, P) en fonctionnement automatique, en utilisant une autre caractéristique de couplage, notamment de nature plus sportive.

12. Véhicule automobile selon la revendication 11,
**caractérisé en ce que**
les possibilités de fonctionnement de la transmission en fonctionnement alternatif sont au moins partiellement sélectionnées à l'aide du levier de sélection (1).

13. Véhicule automobile selon la revendication 11 ou 12,
**caractérisé en ce que**
les possibilités de fonctionnement de la transmission en fonctionnement alternatif sont affichées au moins partiellement par un dispositif d'affichage optique.
